# EUROPÄISCHE PATENTSCHRIFT

(11) **EP 3 579 985 B1**
(45) Veröffentlichungstag und Bekanntmachung des Hinweises auf die Patenterteilung: **21.12.2022**
(21) Anmeldenummer: 17730363.3
(22) Anmeldetag: 17.05.2017
(51) Int. Cl.: B08B 15/00, B08B 15/02, B23Q 1/00, B25H 1/20, B25H 1/14, B25H 1/16

(54) **ABSAUGTISCH MIT EINEM WERKSTÜCKHALTER FÜR EIN ZU HALTENDES WERKSTÜCK**
DOWNDRAFT TABLE HAVING A WORKPIECE HOLDER FOR A WORKPIECE TO BE HELD
TABLE ASPIRANTE POURVUE D'UN DISPOSITIF DE FIXATION D'UNE PIÈCE

(30) Priorität: 13.02.2017 DE 102017102847
(43) Veröffentlichungstag der Anmeldung: 18.12.2019
(73) Patentinhaber: ESTA Apparatebau GmbH & Co. KG, 89250 Senden (DE)
(72) Erfinder: KRATER, Sebastian, 89250 Senden (DE); PALMEIRO-ROHLEDER, Daniel, 89077 Ulm (DE)
(74) Vertreter: Michalski Hüttermann & Partner Patentanwälte mbB
(86) Internationale Anmeldenummer: PCT/DE2017/100422
(87) Internationale Veröffentlichungsnummer: WO 2018/145677

(56) Entgegenhaltungen:
- EP-A1- 0 522 098
- DE-A1-102004 008 101
- DE-U1-202010 002 691

## Beschreibung

Die Erfindung betrifft einen Absaugtisch mit einem Werkstückhalter für ein zu haltendes Werkstück.

Werkzeughalter werden üblicherweise auf Bearbeitungstischen montiert. Sind die Bearbeitungstische als Absaugtische konzipiert, erfolgt eine Absaugung nach unten, hinten oder seitlich.

Diese Bearbeitungstische sind oftmals in der Werkhalle fixiert und somit nicht frei beweglich. Der Werker spannt sein Bearbeitungsstück in den starren, orts- und bewegungsfesten Werkzeughalter ein und muss beim Bearbeiten das Werkzeug oder eine Maschine (z.B. einen Winkelschleifer) in zum Teil ergonomisch ungünstigen Positionen bewegen. Zudem ist unter Umständen ein mehrmaliges Umspannen des Werkstückes nötig um alle Bearbeitungsseiten zu erreichen.

Alternativ zu einem Absaugtisch kann eine Absaughaube eingesetzt werden, diese muss ebenfalls nachgeführt werden - hier stellt eine zwei-Hand Bedienung eine Problematik dar - um eine Erfassung der anfallenden Stäube zu ermöglichen.

Aus der EP 0 522 098 B1 ist eine Vorrichtung, gemäß dem Oberbegriff des Anspruchs 1, zum Absaugen von auf einer Bearbeitungsmaschine im Bereich eines Werkstückes anfallenden Bearbeitungsrückständen, wie Späne und/oder Stäube, mit einer das auf einem Arbeitstisch aufgespannte Werkstück umgebenden Einfassung zur Eingrenzung des Ablagerungsbereichs der Bearbeitungsrückstände in einem nach oben offenen Saugraum und mit einem an den Saugraum über einen Saugkanal angeschlossenen Saugaggregat zur Erzeugung eines Saugluftstromes innerhalb des Saugraumes, wobei der Arbeitstisch mehrere Spannuten zum Festspannen des Werkstückes aufweist.

Aufgabe der Erfindung ist eine Schaffung einer ergonomischen und effektiven Plattform zur Bearbeitung von Werkstücken, wobei Möglichkeit eines höchst flexiblen Einsatzes der Anlage gegeben sein soll.

Diese Aufgabe wird durch eine einen Absaugtisch mit einem Werkstückhalter für ein zu haltendes Werkstück nach den Merkmalen des Anspruchs 1 gelöst.

Erfindungsgemäß ist der Absaugtisch mit einem Werkstückhalter für ein zu haltendes Werkstück ausgestattet, wobei der Werkstückhalter ortsfest ausgestaltet ist, wobei unterhalb und/oder neben dem Werkstückhalter eine Absaugvorrichtung angeordnet ist, vermittels welcher Partikel und/oder Gase in einem Abluftstrom nach unten abgeführt werden können,
wobei die Absaugvorrichtung gegenüber dem Werkstückhalter um diesen herum angeordnet und um den Werkstückhalter herum drehbar ausgestaltet ist.

Ein Werkstückhalter kann somit in der Tischmitte und nicht wie bisher am Rande des Tisches befestigt werden. Durch diese Maßnahme werden Rauche und Stäube sehr viel besser erfasst als dies bei einer tischkantennahen Aufstellung der Fall wäre.

Die durch die Absaugvorrichtung gebildete Tischfläche ist um 360° drehbar. Die eigentliche Drehung des Tisches kann mit der Hüfte des Werkers geschehen, indem dieser sich um das auf dem Tisch befindliche Werkstück dreht und den Tisch dadurch "automatisch" mitführt. So kann der Werker die für die Bearbeitung erforderliche günstigste Arbeitsstellung einnehmen, ohne dazu den Tisch manuell, also mit den Händen nachführen zu müssen. Beide Hände bleiben frei und können sich der Bearbeitung des Werkstücks widmen. Dies ist besonders bei Arbeiten mit handgeführten Maschinen, die beide Hände erfordern (z.B. Winkelschleifer), von großem Vorteil, da ansonsten immer mindestens eine Hand das Werkstück bzw. die Maschine verlassen muss, um den Tisch neu zu positionieren.

Zusätzlich kann optional eine automatische Repositionierung des Werkstücks/Werkstückhalters, synchronisiert mit der Drehbewegung des Tischs ermöglicht werden um immer eine ergonomisch optimale Arbeitsposition zu erreichen.

Dem folgend ist von Vorteil vorgesehen, dass die Absaugvorrichtung in Form einer Haube ausgestaltet ist und mindestens eine Einbuchtung für eine an dem Absaugtisch arbeitende Person an mindestens einer Seite aufweist. Der Tisch verfügt an einer Seite über eine Einbuchtung, in der sich der Werker befindet. Durch diese Einbuchtung kann der Werker, trotz Absaugung, um den Werkstückhalter, nah am zu bearbeitenden Objekt stehen. Dadurch kann er das Werkstück ergonomisch günstig und ermüdungsfrei bearbeiten.

Eine besonders vorteilhafte und daher bevorzugter Ausgestaltung der Erfindung sieht vor, dass die Absaugvorrichtung am oberen Rand der Haube wenigstens eine angelenkte Seitenwand aufweist. Hierdurch bilden mehrere nebeneinander am oberen Rand der Haube angelenkte Seitenwände bei senkrechter Stellung eine Verlängerung des Rands der Haube nach oben. Eine optimale Einstellung der Absaugung und des Spänefangs ist so ermöglicht.

Die abklappbaren Seitenwände können auch zur Bearbeitung von größeren Werkstücken herangezogen werden. Auch ist ein Abklappen ganz nach unten möglich.

Dem folgend ist von Vorteil vorgesehen, dass mehrere Seitenwände am Rand der Haube, mit Ausnahme im Bereichs der Einbuchtung, angelenkt sind.

Bevorzugterweise ist eine mit einer Person über ein Verbindungselement zu verbindende Befestigungsvorrichtung an der Haube angeordnet, vermittels welcher die Absaugvorrichtung mit der Bewegung der Person um den Werkstückhalter gedreht werden kann.

Von Vorteil ist/sind die Absaugvorrichtung und/oder der Werkstückhalter höhenverstellbar ausgestaltet. Die Höhenverstellbarkeit erlaubt eine optimale Ergonomische Anpassung an den jeweiligen Werker.

Gemäß einer Ausgestaltung der Erfindung kann ein Podest unter der Absaugvorrichtung und/oder dem Werkstückhalter angeordnet sein, auf dem eine Person stehen kann und sich um den Werkstückhalter herum bewegen kann.

Dem folgend kann nach einer weiteren Ausgestaltung vorgesehen sein, dass in dem Podest eine Abluftleitung und/oder eine Saugvorrichtung angeordnet ist, die die Luft um den Werkstückhalter herum durch die Absaugvorrichtung transportiert.

Eine weitere Ausgestaltung der Erfindung sieht vor, dass die Absaugvorrichtung einen bezüglich seiner Position zum Werkstückhalter einstellbaren Absaugarm mit im Innern desselben geführtem Abluftstrom aufweist.

Bevorzugterweise ist die die Absaugvorrichtung nach oben hin vermittels eines Lochblechs, eines Rostes oder eines Gitters, beispielsweise aus Stahl, GFK oder Holz, abgedeckt.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Schrägansicht eines erfindungsgemäßen Absaugtischs mit einem Werkstückhalter und um diesen drehbarer Absaugvorrichtung,
- Fig. 2: eine schematische Darstellung des Absaugtischs aus Fig. 1 von der Seite her gesehen,
- Fig. 3: eine schematische Darstellung des Absaugtischs aus Fig. 1 von oben her gesehen,
- Fig. 4: eine schematische Querschnitts-Darstellung eines erfindungsgemäßen Absaugtischs mit einem Werkstückhalter und um diesen drehbarer Absaugvorrichtung, wobei die Luftführung ersichtlich wird,
- Fig. 5: ein Detail der drehbaren Verbindung zwischen drehbarem Ober- und starrem Unterteil des Absaugtischs,
- Fig. 6: eine schematische Darstellung des Absaugtischs aus Fig. 1 mit teilweise waagerecht gestellten Seitenwänden,
- Fig. 7: eine schematische Darstellung des Absaugtischs aus Fig. 1 mit waagerecht gestellten Seitenwänden,
- Fig. 8: eine schematische Darstellung des Absaugtischs aus Fig. 7, wobei die Absaugvorrichtung gegenüber dem Werkstückhalter verdreht ist,
- Fig. 9: eine schematische Seitenansicht eines Absaugtischs mit teilweise unter einem Winkel zur Horizontalen angestellten Seitenwänden,
- Fig. 10: den Absaugtisch aus Fig. 9 von schräg oben her gesehen,
- Fig. 11: eine schematische Seitenansicht eines Absaugtischs mit ganz nach unten abgeklappten Seitenwänden,
- Fig. 12: den Absaugtisch aus Fig. 11 von schräg oben her gesehen,
- Fig. 13: eine schematische Schrägansicht eines erfindungsgemäßen Absaugtischs mit Werker mit einer ersten Position der Absaugvorrichtung,
- Fig. 14: eine schematische Schrägansicht eines erfindungsgemäßen Absaugtischs mit Werker mit einer zweiten Position der Absaugvorrichtung, und
- Fig. 15: eine schematische Schrägansicht eines erfindungsgemäßen Absaugtischs mit Podest.

Die in den Figuren gleichen Bezugsziffern bezeichnen gleiche oder gleich wirkende Elemente.

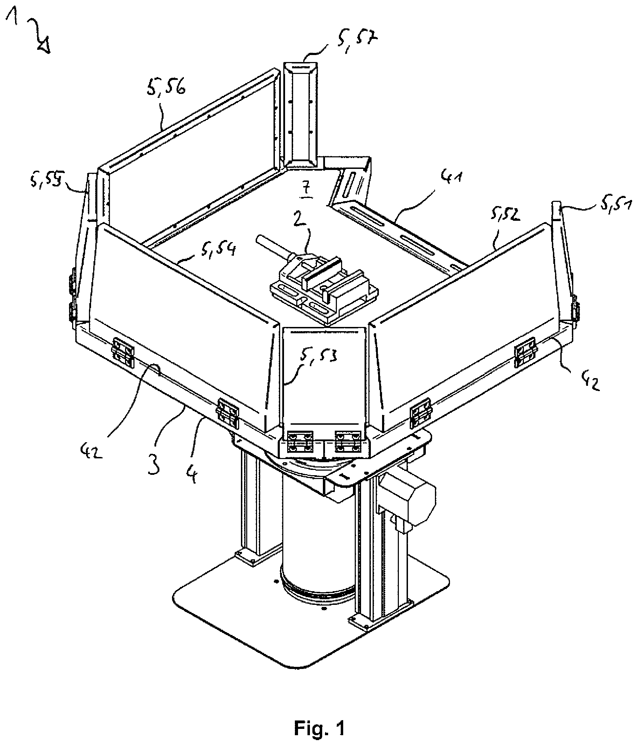

In Fig. 1 ist ein beispielhafter Absaugtisch 1 mit einem Werkstückhalter 2 für ein zu haltendes Werkstück gezeigt.

Der Werkstückhalter 2 ist ortsfest ausgestaltet, unterhalb und neben dem Werkstückhalter 2 ist eine Absaugvorrichtung 3 angeordnet, vermittels welcher Partikel und/oder Gase in einem Abluftstrom nach unten abgeführt werden können.

Dabei ist die Absaugvorrichtung 3 gegenüber dem Werkstückhalter 2 um diesen herum angeordnet und um den Werkstückhalter 2 herum drehbar ausgestaltet ist.

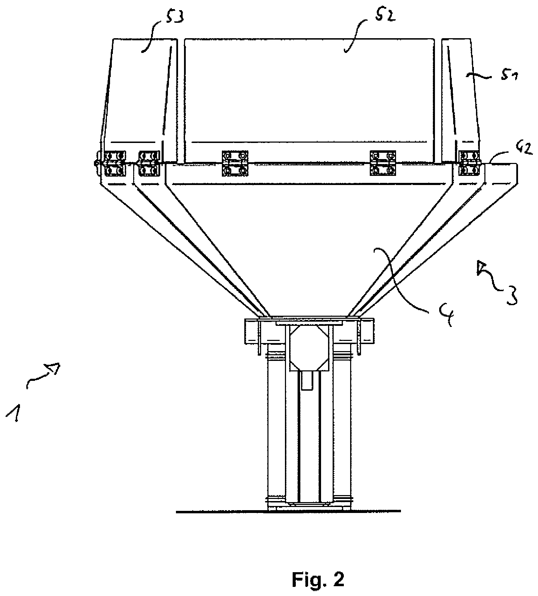

Die Absaugvorrichtung 3 ist in Form einer Haube 4 ausgestaltet siehe auch Fig. 2 und weist eine Einbuchtung 41 für eine an dem Absaugtisch 1 arbeitende Person P an einer Seite auf.

Die Absaugvorrichtung 3 weist am oberen Rand 42 der Haube 4 mehrere angelenkte Seitenwände 5, 51 bis 57 auf.

Die Seitenwände sind nicht im Bereich der Einbuchtung 41, angelenkt, um einen freien Zugang eines Werkers zu ermöglichen.

Die Absaugvorrichtung 3 ist nach oben hin vermittels eines Lochblechs 7 abgedeckt. Hier kann auch ein Gitter oder ein Rost aus passenden Materialien denkbar sein.

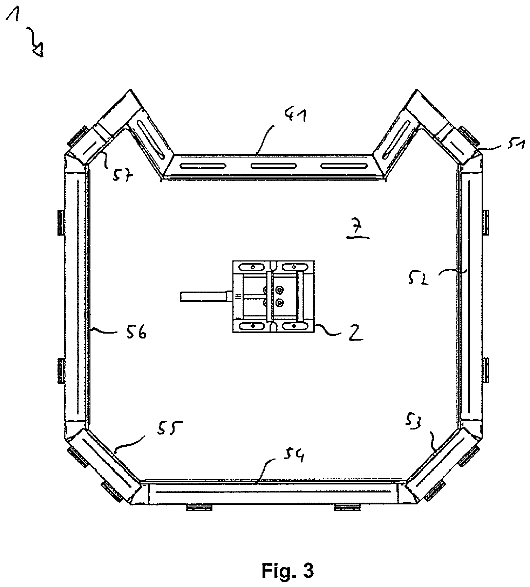

Die Fig. 2 und 3 zeigen den Absaugtisch 1 aus weiteren Ansichten.

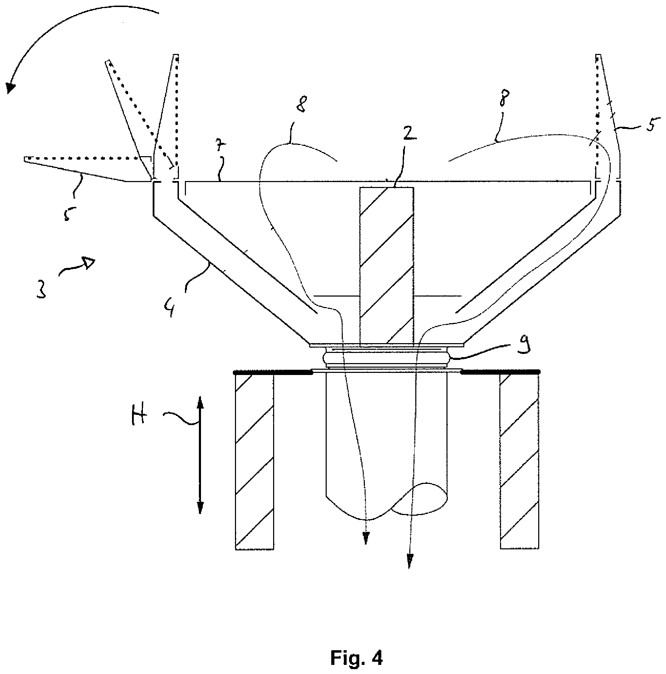

In Fig. 4 ist eine schematische Querschnitts-Darstellung des Absaugtischs 1 gezeigt. Die Abluftführung 8 ist ersichtlich. Vom Werkstückhalter 2 bzw. dessen Aufnahme wird die Luft nach unten durch die Haube 4 gezogen. Die abklappbaren Seitenwände 5 dienen der Luftführung und dem Fangen der Späne. Die Vorrichtung ist Höhenverstellbar (Pfeil H).

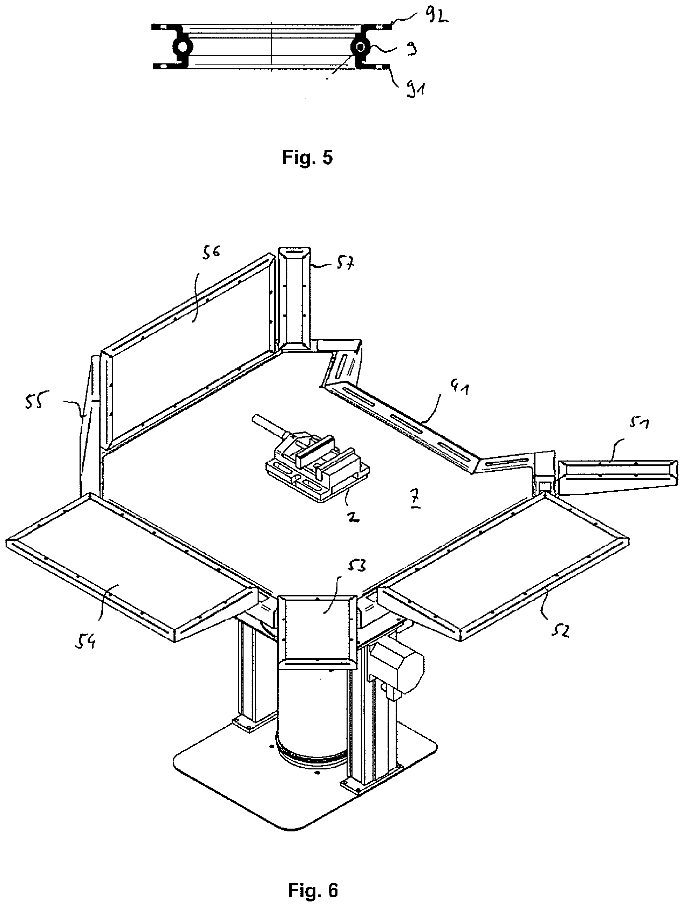

Die Drehung des oberen Teils erfolgt über einen zwischen einer Aufnahme 91 und einem Drehteller 92 angeordnetem Drehkörper 9. Siehe hierzu auch Fig. 5.

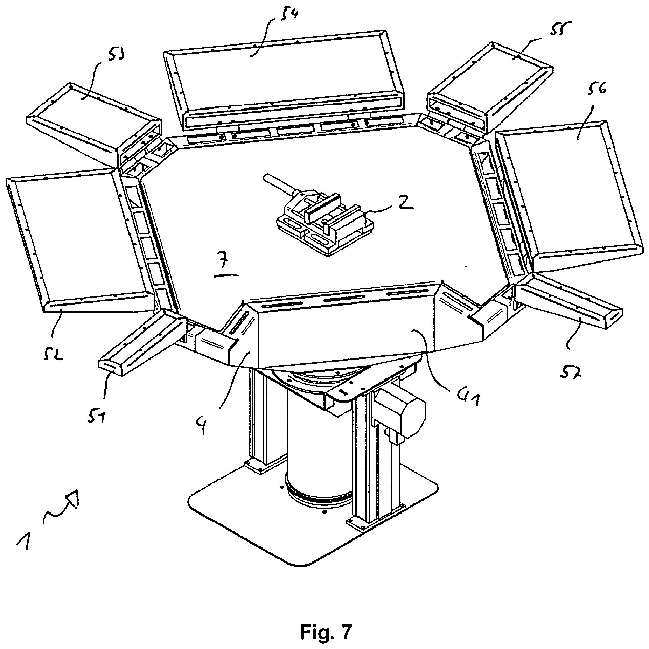

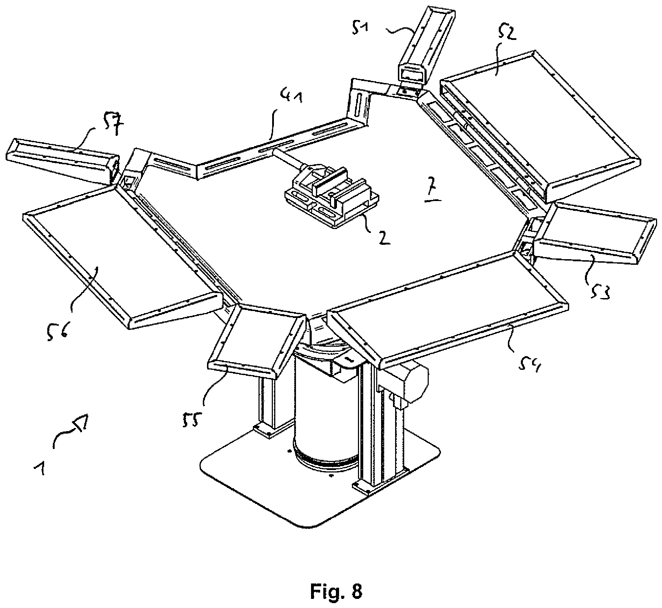

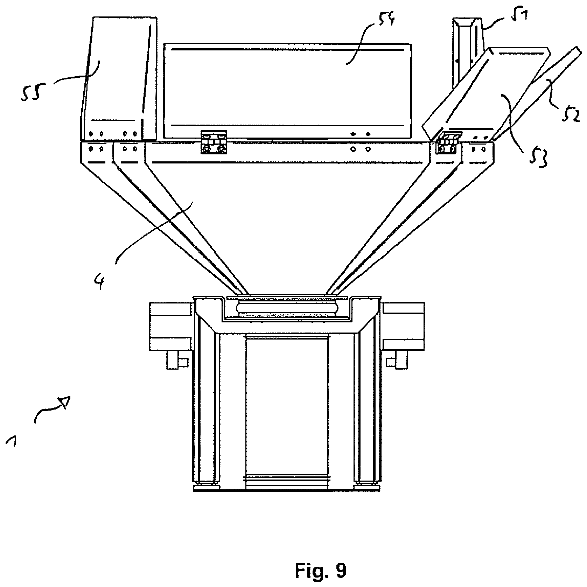

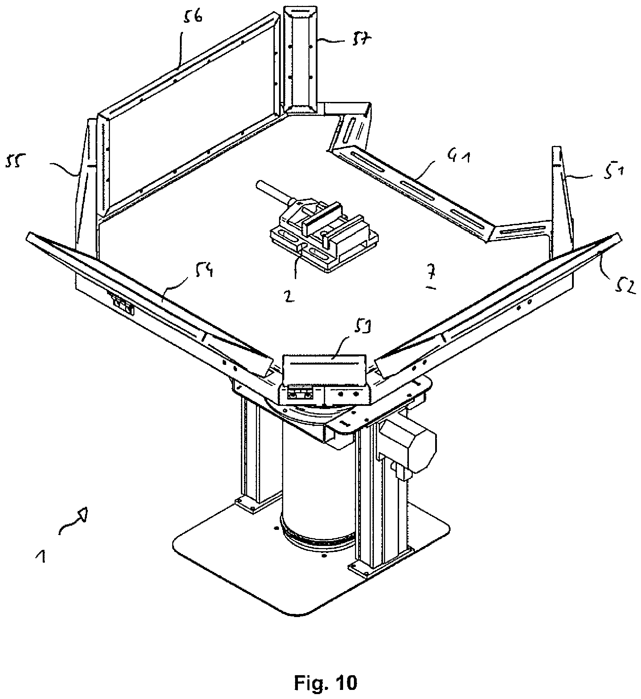

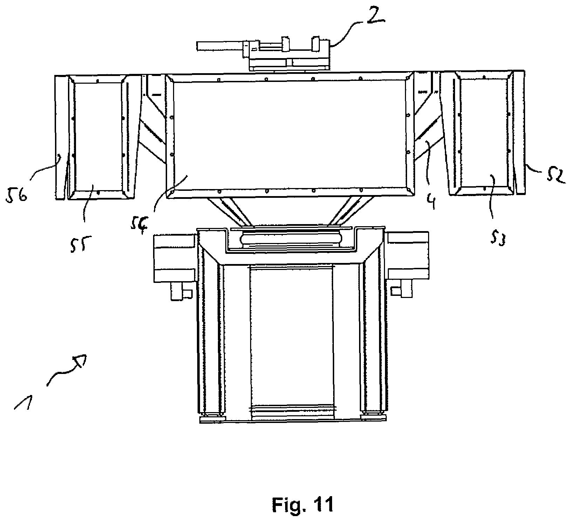

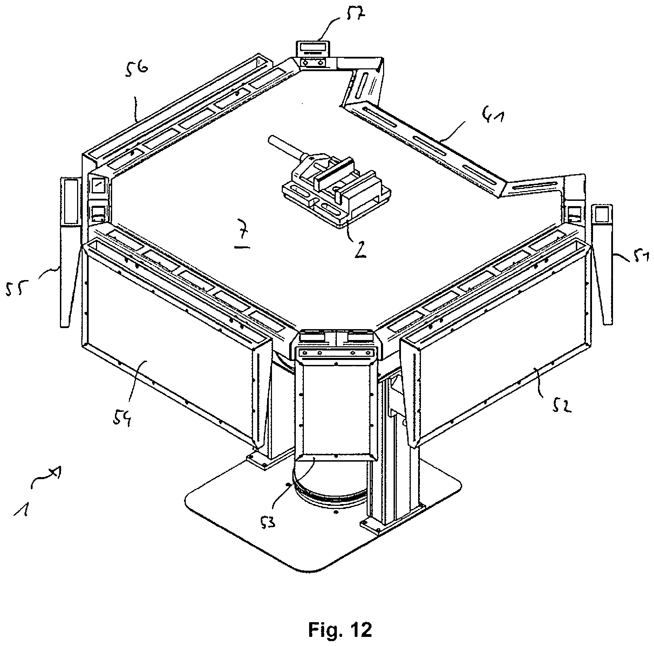

Die Fig. 6 bis 12 zeigen den Absaugtisch 1 mit verschiedenen Einstellungen der Seitenwände 5, 51 bis 57. Entsprechend dem einzuspannenden Werkstück und/oder der durchzuführenden Bearbeitung sind sehr viele verschiedene Anpassungen möglich.

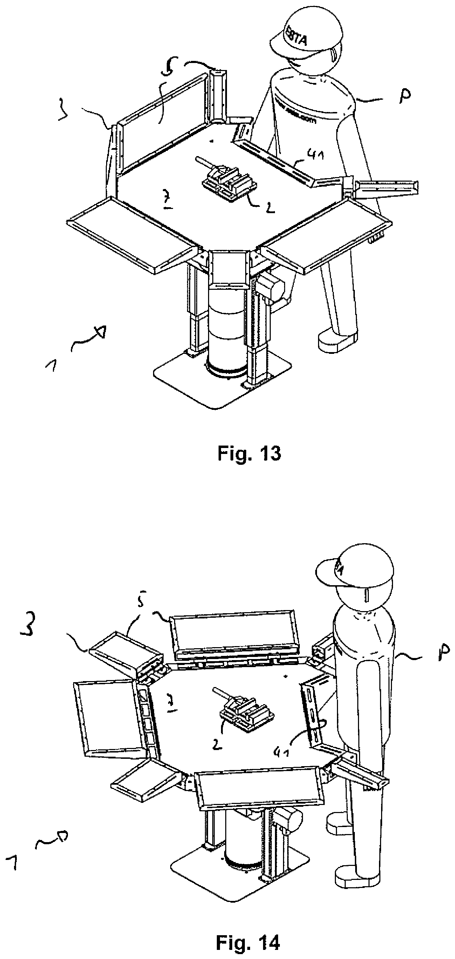

Die Fig. 13 und 14 zeigen beispielhaft wie die Absaugvorrichtung 3 des Absaugtischs 1 durch die in der Einbuchtung 41 stehende Person P um den ortsfesten Werkstückhalter 2 verdreht werden kann.

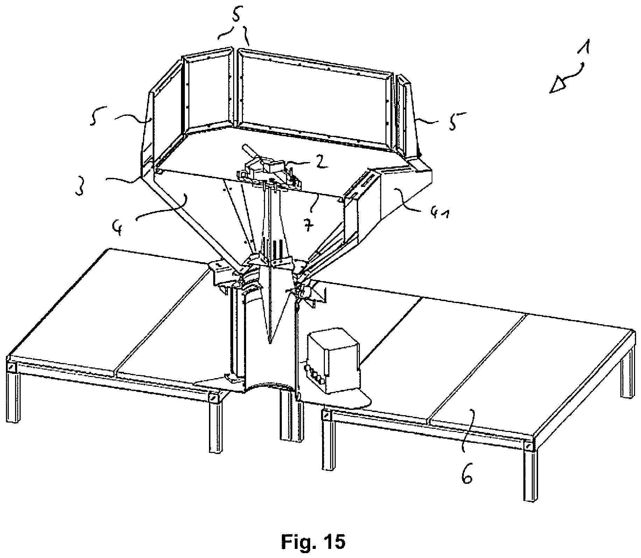

Fig. 15 zeigt ein Podest 6 auf dem die Absaugvorrichtung 3 und der Werkstückhalter 2 montiert ist, wobei der Raum unter dem Podest für Leitungs- und Rohrführungen genutzt werden kann.

### Bezugszeichenliste

- 1: Absaugtisch
- 2: Werkstückhalter
- 3: Absaugvorrichtung
- 4: Haube
- 41: Einbuchtung
- 42: oberer Rand
- 5: Seitenwand
- 51: Seitenwand
- 52: Seitenwand
- 53: Seitenwand
- 54: Seitenwand
- 55: Seitenwand
- 56: Seitenwand
- 57: Seitenwand
- 6: Podest
- 7: Lochblech
- 8: Abluft
- 9: Drehkörper
- 91: Aufnahme
- 92: Drehteller

- H: Höhenverstellbarkeit

- P: Person

## Patentansprüche

1. Absaugtisch (1) mit einem Werkstückhalter (2) für ein zu haltendes Werkstück, wobei unterhalb und/oder neben dem Werkstückhalter (2) eine Absaugvorrichtung (3) angeordnet ist, vermittels welcher Partikel und/oder Gase in einem Abluftstrom nach unten abgeführt werden können, wobei die Absaugvorrichtung (3) gegenüber dem Werkstückhalter (2) um diesen herum angeordnet und drehbar angeordnet ist, **dadurch gekennzeichnet dass** der Werkstückhalter (2) ortsfest ausgestaltet ist, und die Absaugvorrichtung (3) gegenüber dem Werkstückhalter (2) um den Werkstückhalter (2) herum drehbar ausgestaltet ist.

2. Absaugtisch nach Anspruch 1,
**dadurch gekennzeichnet,**
**dass** die Absaugvorrichtung (3) in Form einer Haube (4) ausgestaltet ist und mindestens eine Einbuchtung (41) für eine an dem Absaugtisch (1) arbeitende Person (P) an mindestens einer Seite aufweist.

3. Absaugtisch nach Anspruch 2,
**dadurch gekennzeichnet,**
**dass** die Absaugvorrichtung (3) am oberen Rand (42) der Haube (4) wenigstens eine angelenkte Seitenwand (5, 51 bis 57) aufweist.

4. Absaugtisch nach Anspruch 3,
**dadurch gekennzeichnet,**
**dass** mehrere Seitenwände (5, 51 bis 57) am Rand (42) der
Haube (4), mit Ausnahme im Bereichs der Einbuchtung (41), angelenkt sind.

5. Absaugtisch nach einem der Ansprüche 1 bis 4,
**dadurch gekennzeichnet,**
**dass** eine mit einer Person (P) über ein Verbindungselement zu verbindende Befestigungsvorrichtung an der Haube (4) angeordnet ist, vermittels welcher die Absaugvorrichtung (3) mit der Bewegung der Person (P) um den Werkstückhalter (2) gedreht werden kann.

6. Absaugtisch nach einem der Ansprüche 1 bis 5,
**dadurch gekennzeichnet,**
**dass** die Absaugvorrichtung (3) und/oder der Werkstückhalter (2) höhenverstellbar ausgestaltet ist/sind.

7. Absaugtisch nach einem der Ansprüche 1 bis 6,
**dadurch gekennzeichnet,**
**dass** ein Podest (6) unter der Absaugvorrichtung (3) und/oder dem Werkstückhalter (2) angeordnet ist, auf dem eine Person stehen kann und sich um den Werkstückhalter (2) herum bewegen kann.

8. Absaugtisch nach Anspruch 7,
**dadurch gekennzeichnet,**
**dass** in dem Podest (6) eine Abluftleitung und/oder eine Saugvorrichtung angeordnet ist, die die Luft um den Werkstückhalter (2) herum durch die Absaugvorrichtung (3) transportiert.

9. Absaugtisch nach einem der Ansprüche 1 bis 8,
**dadurch gekennzeichnet,**
**dass** die Absaugvorrichtung (3) einen bezüglich seiner Position zum Werkstückhalter einstellbaren Absaugarm mit im Innern desselben geführtem Abluftstrom aufweist.

10. Absaugtisch nach einem der Ansprüche 1 bis 9,
**dadurch gekennzeichnet,**
**dass** die Absaugvorrichtung (3) nach oben hin vermittels eines Lochblechs (7), eines Rostes oder eines Gitters abgedeckt ist.

## Claims

1. Suction table (1) comprising a workpiece holder (2) for a workpiece to be held,
wherein a suction device (3) is arranged below and/or next to the workpiece holder (2), by means of which suction device particles and/or gases can be discharged downwards in an exhaust air stream, wherein the suction device (3) is arranged around the workpiece holder (2) and rotatable relative to the workpiece holder (2);
**characterized in that**
the workpiece holder (2) is of stationary design; and
the suction device (3) is configured to be rotatable around the workpiece holder (2).

2. Suction table according to claim 1,
**characterized in that**
the suction device (3) is designed in the form of a hood (4) and comprises at least one recess (41) on at least one side for a person (P) working at the suction table (1).

3. Suction table according to claim 2,
**characterized in that**
the suction device (3) comprises at least one hinged side wall (5, 51 to 57) at the upper edge (42) of the hood (4).

4. Suction table according to claim 3,
**characterized in that**
a plurality of side walls (5, 51 to 57) are hinged to the edge (42) of the hood (4), with the exception of the area of the recess (41).

5. Suction table according to any one of claims 1 to 4,
**characterized in that**
a fastening device to be connected to a person (P) via a connecting element is arranged at the hood (4), by means of which fastening device the suction device (3) can be rotated around the workpiece holder (2) with the movement of the person (P).

6. Suction table according to any one of claims 1 to 5,
**characterized in that**
the suction device (3) and/or the workpiece holder (2) is/are configured to be adjusted in height.

7. Suction table according to any one of claims 1 to 6,
**characterized in that**
a platform (6) is arranged below the suction device (3) and/or the workpiece holder (2), on which platform a person can stand and move around the workpiece holder (2).

8. Suction table according to claim 7,
**characterized in that**
an exhaust air duct and/or a sucking device is/are arranged in the platform (6), which transports the air around the workpiece holder (2) through the suction device (3).

9. Suction table according to any one of claims 1 to 8,
**characterized in that**
the suction device (3) comprises a suction arm which is adjustable with respect to its position relative to the workpiece holder and comprises an exhaust air stream which is guided in the interior thereof.

10. Suction table according to any one of claims 1 to 9,
**characterized in that**
the suction device (3) is covered at the top by means of a perforated plate (7), a grate or a grid.

## Revendications

1. Table aspirant (1) avec un porte-pièce (2) pour une pièce à maintenir,
un dispositif d'aspiration (3) au moyen duquel des particules et/ou des gaz peuvent être évacués vers le bas dans un flux d'air d'évacuation étant disposé au-dessous et/ou à côté du porte-pièce (2),
le dispositif d'aspiration (3) étant disposé autour du porte-pièce (2) et de manière à pouvoir tourner autour de celui-ci,
**caractérisé en ce que**
le porte-pièce (2) est configuré pour être fixe, et le dispositif d'aspiration (3) est configuré par rapport au porte-pièce pour pouvoir tourner autour du porte-pièce (2).

2. Table aspirant selon la revendication 1,
**caractérisé en ce que**
le dispositif d'aspiration (3) est réalisé sous la forme d'une hotte (4) et présente au moins une échancrure (41) sur au moins un côté pour une personne (P) travaillant à la table d'aspiration (1).

3. Table aspirant selon la revendication 2,
**caractérisé en ce que**
le dispositif d'aspiration (3) présente au moins une paroi latérale articulée (5, 51 à 57) au bord supérieur (42) de la hotte (4).

4. Table aspirant selon la revendication 3,
**caractérisé en ce que**
plusieurs parois latérales (5, 51 à 57) sont articulées sur le bord (42) de la hotte (4), à l'exception de la zone de l'échancrure (41).

5. Table aspirant selon l'une quelconque des revendications 1 à 4,
**caractérisé en ce que**
un dispositif de fixation destiné à être relié à une personne (P) par un élément de liaison par l'intermédiaire duquel le dispositif d'aspiration (3) peut être tourné autour du porte-pièce (2) par le mouvement de la personne (P) est disposé sur la hotte (4).

6. Table aspirant selon l'une quelconque des revendications 1 à 5,
**caractérisé en ce que**
le dispositif d'aspiration (3) et/ou le porte-pièce (2) sont configurés pour être réglables en hauteur.

7. Table aspirant selon l'une quelconque des revendications 1 à 6,
**caractérisé en ce que**
une plateforme (6) sur laquelle une personne peut se tenir debout et se déplacer autour du porte-pièce (2) est disposée sous le dispositif d'aspiration (3) et/ou le porte-pièce (2).

8. Table aspirant selon la revendication 7,
**caractérisé en ce que**
une conduite d'évacuation d'air et/ou un dispositif d'échappement transportant l'air autour du porte-pièce (2) à travers le dispositif d'aspiration (3) est disposé dans la plate-forme (6),

9. Table aspirant selon l'une quelconque des revendications 1 à 8,
**caractérisé en ce que**
le dispositif d'aspiration (3) comporte un bras d'aspiration dont la position par rapport au porte-pièce est réglable, le flux d'air d'évacuation étant guidé à l'intérieur de celui-ci.

10. Table aspirant selon l'une quelconque des revendications 1 à 9,
**caractérisé en ce que**
le dispositif d'aspiration (3) est recouvert vers le haut par une tôle perforée (7), une grille ou un grillage.
